# EUROPEAN PATENT APPLICATION

(11) **EP 4 492 492 A1**
(43) Date of publication of application: **15.01.2025**
(21) Application number: 23766822.3
(22) Date of filing: 07.03.2023
(51) Int. Cl.: H01M 4/139, H01M 4/13, H01M 10/0562, H01M 10/0585

(54) **ELECTRODE MEMBER AND METHOD FOR MANUFACTURING SAME, BATTERY MEMBER AND METHOD FOR MANUFACTURING SAME, AND METHOD FOR MANUFACTURING BATTERY**

(30) Priority: 10.03.2022 JP 2022036861
(71) Applicant: Mitsui Mining & Smelting Co., Ltd., Shinagawa-ku Tokyo 141-8584 (JP)
(72) Inventor: TAKAHASHI, Tsukasa, Ageo-shi, Saitama 362-0021 (JP); CHIKUMOTO, Takashi, Ageo-shi, Saitama 362-0021 (JP); OGATA, Yoichiro, Ageo-shi, Saitama 362-0021 (JP)
(74) Representative: Novagraaf Technologies
(86) International application number: PCT/JP2023/008483
(87) International publication number: WO 2023/171646

(57) **Abstract**

An object of the present invention is to provide an electrode member that enables a battery to be produced with high degrees of freedom in material selection and structure design, and a method for producing the electrode member. An electrode member (1) includes an active material layer (2) containing an active material and a carrier layer (3) disposed on one face of the active material layer (2). It is preferable that the carrier layer (3) is constituted by a carrier resin, a carrier glass material, or a carrier metal foil. It is preferable that the electrode member further includes a solid electrolyte layer (4) containing a solid electrolyte and being disposed on the other face of the active material layer (2). It is also preferable that the solid electrolyte layer (4) contains a sulfide solid electrolyte. It is also preferable that the solid electrolyte layer (4) contains a porous support member.

## Description

### Technical Field

The present invention relates to a constituent member of an electrode and a method for producing the same. The present invention also relates to a constituent member of a battery and a method for producing the same. The present invention further relates to a method for producing a battery.

### Background Art

Batteries with various shapes and structures are used in various fields including portable electronic devices and automobiles such as EVs and PHVs. Accordingly, batteries are produced using materials and processes that are suitable for the shapes and structures of the batteries. For example, Patent Literature 1 discloses producing a battery by applying an electrode mixture to a current collector.

### Citation List

### Patent Literature

Patent Literature 1: US 2021/104778A1

### Summary of Invention

However, with a widening range of applications of batteries, there is demand for batteries that can be produced with high degrees of freedom in material selection and structure design even when the shapes and structures of the batteries are diverse. Therefore, an object of the present invention is to provide an electrode member and a battery member that enable a battery to be produced with high degrees of freedom in material selection and structure design, and methods for producing them.

The present invention provides an electrode member comprising:
an active material layer containing an active material; and
a carrier layer disposed on a first face of the active material layer.

Also, the present invention provides, as a preferred method for producing the electrode member, a method for producing a battery member, the method comprising the steps of:
preparing an electrode slurry containing an active material and a solvent; and
forming an active material layer by applying the electrode slurry to a first face of a carrier layer and drying the electrode slurry.

Also, the present invention provides a battery member comprising:
a solid electrolyte layer;
a positive electrode active material layer containing a positive electrode active material and being disposed on a first face of the solid electrolyte layer; and
a negative electrode active material layer containing a negative electrode active material and being disposed on a second face of the solid electrolyte layer,
wherein the positive electrode active material layer and the negative electrode active material layer constitute an outermost surface of the battery member.

Also, the present invention provides a battery member comprising:
a positive electrode member including
   a positive electrode active material layer containing a positive electrode active material and
   a first carrier layer disposed on a first face of the positive electrode active material layer;
a negative electrode member including
   a negative electrode active material layer containing a negative electrode active material and
   a second carrier layer disposed on a first face of the negative electrode active material layer; and
a solid electrolyte layer disposed between the positive electrode member and the negative electrode member,
wherein the first carrier layer, the positive electrode active material layer, the solid electrolyte layer, the negative electrode active material layer, and the second carrier layer are stacked in this order.

Furthermore, the present invention provides, as a preferred method for producing the battery member, a method for producing a battery member, the method comprising the steps of:
preparing a positive electrode slurry containing a positive electrode active material and a solvent and a negative electrode slurry containing a negative electrode active material and a solvent;
forming a positive electrode member by applying the positive electrode slurry to a first face of a first carrier layer and drying the positive electrode slurry, and forming a negative electrode member by applying the negative electrode slurry to a first face of a second carrier layer and drying the negative electrode slurry; and
disposing a self-supporting solid electrolyte layer between the positive electrode member and the negative electrode member to obtain a stack in which the first carrier layer, the positive electrode active material layer, the solid electrolyte layer, the negative electrode active material layer, and the second carrier layer are stacked in this order.

Furthermore, the present invention provides a method for producing a battery, the method comprising the steps of:
preparing a positive electrode slurry containing a positive electrode active material and a solvent and a negative electrode slurry containing a negative electrode active material and a solvent;
forming a positive electrode member by applying the positive electrode slurry to a first face of a first carrier layer and drying the positive electrode slurry, and forming a negative electrode member by applying the negative electrode slurry to a first face of a second carrier layer and drying the negative electrode slurry;
disposing a self-supporting solid electrolyte layer between the positive electrode member and the negative electrode member to form a stack in which the first carrier layer, the positive electrode active material layer, the solid electrolyte layer, the negative electrode active material layer, and the second carrier layer are stacked in this order;
pressing the stack at least in a thickness direction;
peeling the first carrier layer and the second carrier layer from the pressed stack; and
disposing a first current collector on a first face of the positive electrode active material layer of the stack after the peeling, wherein the first face is opposite to a second face of the positive electrode active material layer on which the solid electrolyte layer is formed, and disposing a second current collector on a first face of the negative electrode active material layer, wherein the first face is opposite to a second face of the negative electrode on which the solid electrolyte layer is formed.

Furthermore, the present invention provides a method for producing a battery, the method comprising the steps of:
preparing a positive electrode slurry containing a positive electrode active material and a solvent and a negative electrode slurry containing a negative electrode active material and a solvent;
forming a positive electrode member by applying the positive electrode slurry to a first face of a first carrier layer and drying the positive electrode slurry, and forming a negative electrode member by applying the negative electrode slurry to a first face of a second carrier layer and drying the negative electrode slurry;
disposing a self-supporting solid electrolyte layer between the positive electrode member and the negative electrode member to form a stack in which the first carrier layer, the positive electrode active material layer, the solid electrolyte layer, the negative electrode active material layer, and the
second carrier layer are stacked in this order;
pressing the stack at least in a thickness direction;
peeling the first carrier layer and the second carrier layer from the pressed stack; and
stacking two or more of the stack after the peeling via a current collector in such a manner that the two or more stacks are electrically connected.

### Brief Description of Drawings

[Fig. 1] Fig. 1 schematically shows the structure of an embodiment of an electrode member of the present invention.
[Fig. 2] Fig. 2 schematically shows the structure of another embodiment of the electrode member of the present invention.
[Fig. 3] Fig. 3 schematically shows the structure of an embodiment of an electrode member of the present invention.
[Fig. 4] Fig. 4 schematically shows the structure of another embodiment of the electrode member of the present invention.
[Fig. 5] Fig. 5 shows process diagrams illustrating a preferred method for producing a battery member of the present invention.

### Description of Embodiments

Hereinafter, the present invention will be described based on preferred embodiments thereof, with reference to the drawings.

### Electrode Member

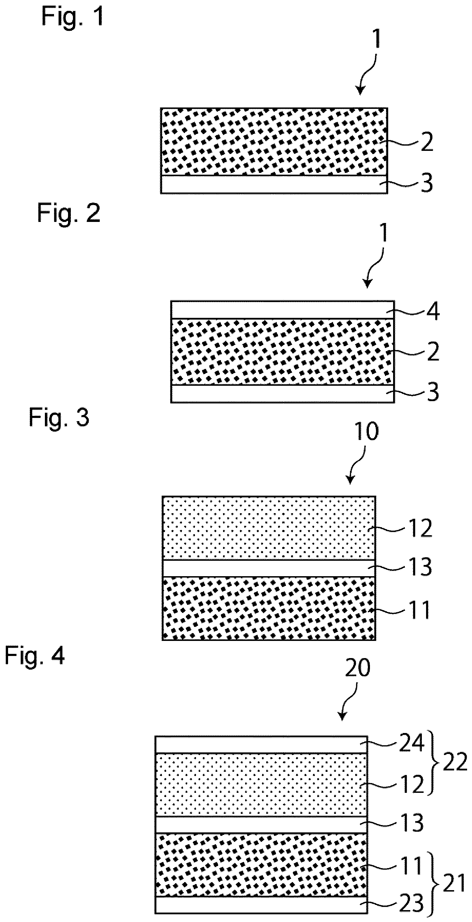

Fig. 1 shows an embodiment of an electrode member of the present invention. The electrode member is a member used for a positive electrode or a negative electrode of a battery. The electrode member generally has a sheet-like form. An electrode member 1 shown in Fig. 1 is a sheet-like member including an active material layer 2 and a carrier layer 3 disposed on one face of the active material layer 2. The electrode member of the present invention is preferably an electrode member for a so-called solid-state battery, which is used in a solid-state battery containing a solid electrolyte, and particularly preferably an electrode member for a so-called all-solid-state battery, which is used in an all-solid-state battery containing a solid electrolyte other than a polymer electrolyte.

The active material layer 2 preferably contains particles of an active material for a battery. The active material may be a positive electrode active material or a negative electrode active material. The active material layer 2 may further contain a binder, a conductive material, a solid electrolyte, and the like. The active material layer 2 may be in the form of a coating film containing a solvent or in the form of a dried film containing almost no solvent. From the viewpoint of enhancing the handleability of the electrode member 1, it is advantageous that the active material layer 2 is in the form of a dried film containing little solvent. The amount of solvent contained in the active material layer 2 in the form of a "dried film" is, for example, preferably 2000 ppm or less, more preferably 1500 ppm or less, even more preferably 1000 ppm or less, and yet even more preferably 900 ppm or less.

The thickness of the active material layer 2 is, for example, preferably 0.1 µm or more, and more preferably 1 µm or more. On the other hand, the thickness thereof is, for example, preferably 2 mm or less, more preferably 1 mm or less, even more preferably 500 µm or less, and yet even more preferably 200 µm or less. When the thickness of the active material layer 2 is within the above-described range, it is easy to handle the electrode member 1.

An active material suitable for the type of a battery to be produced is used as the active material contained in the active material layer 2. Examples of the positive electrode active material include oxide active materials containing a lithium-transition metal. Specifically, layered rock salt-type active materials such as lithium cobalt oxide (LiCoO₂), lithium nickel oxide (LiNiO₂), and LiNi_{1/3}Co_{1/3}Mn_{1/3}O₂; spinel-type active materials such as lithium manganese oxide (LiMn₂O₄), Li(Ni_{0.5}Mn_{1.5})O₄, and Li₁₊ₓMn_{2-x-y}M_{y}O₄, where M represents one or more elements selected from the group consisting of Al, Mg, Co, Fe, Ni, and Zn; olivine-type active materials such as lithium titanate (LiₓTiO_{y}), LiFePO₄, LiMnPO₄, LiCoPO₄, and LiNiPO₄; and the like may be used. On the other hand, examples of the negative electrode active material include Si and Si alloys; carbon materials such as graphite and hard carbon; various oxides such as lithium titanate; metal lithium; lithium alloys; and the like.

The amount of active material contained in the active material layer 2 is not particularly limited as long as it is sufficient to allow the resulting electrode to exhibit the function of an electrode. In the case where the active material layer 2 contains a positive electrode active material, the content of the positive electrode active material is, for example, preferably 50 mass% or more, more preferably 65 mass% or more, and even more preferably 75 mass% or more, when the total mass of the active material layer 2 is taken as 100 mass%. On the other hand, the content of the positive electrode active material may be 99 mass% or less, for example.

In the case where the active material layer 2 contains a negative electrode active material, the content of the negative electrode active material is, for example, preferably 20 mass% or more, more preferably 40 mass% or more, and even more preferably 70 mass% or more, when the total mass of the active material layer 2 is taken as 100 mass%. On the other hand, the content of the negative electrode active material may be 99 mass% or less, for example.

The active material layer 2 may contain a solid electrolyte. There is no particular limitation on the solid electrolyte. Specific materials of the solid electrolyte are the same as those described later in the solid electrolyte layer section, and are therefore not described here. The amount of solid electrolyte contained in the active material layer 2 is not particularly limited as long as it is sufficient to allow an electrode including the active material layer 2 to exhibit a desired function. The content of the solid electrolyte may be, for example, 1 mass% or more and 80 mass% or less when the total mass of the active material layer 2 is taken as 100 mass%.

The active material layer 2 may also contain various additives such as a conductive material and a binder when necessary. Examples of the conductive material include carbon materials such as VGCFs (vapor grown carbon fibers) and carbon nanofibers, metal materials, and the like. Examples of the binder include materials such as polyvinylidene fluoride (PVdF), carboxymethyl cellulose (CMC), butadiene rubber (BR), and styrene-butadiene rubber (SBR), as well as combinations of these materials.

The carrier layer 3 is used as a support for the active material layer 2. For this purpose, the carrier layer 3 preferably has self-supporting properties. Specifically, the carrier layer 3 preferably has such a strength that prevents the carrier layer 3 from creasing, twisting, and the like in the production process of a battery in which the electrode member 1 is used. The thickness of the carrier layer 3 can be appropriately selected according to the material constituting the carrier layer 3, and is preferably a thickness that is sufficient to allow the carrier layer 3 to have self-supporting properties. In addition, a flexible carrier layer 3 may be formed by adjusting the thickness of the carrier layer 3. In the case of a flexible carrier layer, the electrode member can be wound to form a wound body. The thickness of the carrier layer 3 is not particularly limited, and may be, for example, 5 µm or more, 10 µm or more, or 15 µm or more. On the other hand, the thickness of the carrier layer 3 may be, for example, 1000 µm or less, 200 µm or less, or 100 µm or less.

The carrier layer 3 may be transparent to light or impervious to light. The term "light" is not limited to visible light. The material constituting the carrier layer 3 is preferably at least one of resin, glass, and metal, for example. In other words, the carrier layer 3 is preferably constituted by at least one of a carrier resin, a carrier glass material, and a carrier metal foil. The carrier layer 3 may have a multilayer structure in which, for example, two or more of a carrier resin, a carrier glass material, and a carrier metal foil are laid one on top of another.

A material contained in the carrier resin may or may not be conductive. Examples of the material contained in the carrier resin include resins, such as acrylic resins, polyester resins, cellulose derivative resins, polyvinyl acetal resins, polyvinyl butyral resins, vinyl chloride-vinyl acetate copolymers, chlorinated polyolefins, and copolymers of resins of these resin groups. As examples of the carrier glass material, glass cloth, which is a fabric woven from glass fibers, and the like can be used. Examples of the material constituting the carrier metal foil include copper, stainless steel, aluminum, nickel, silver, gold, chromium, cobalt, tin, zinc, brass, alloys of these metals, and the like.

As shown in Fig. 1, the active material layer 2 and the carrier layer 3 may be in direct contact with each other with no other layers provided therebetween, or may have one or more other layers provided therebetween. In either case, the active material layer 2 and the carrier layer 3 are stacked in such a manner as to be peelable or nonpeelable from each other.

The wording "the active material layer 2 and the carrier layer 3 are stacked in such a manner as to be peelable from each other" means that the two layers 2 and 3 can be peeled from each other without causing destruction of the structures of the respective layers. The peel strength between the two layers 2 and 3 is, for example, preferably 10 N/10 mm or less, more preferably 7 N/10 mm or less, and even more preferably 4 N/10 mm or less.

On the other hand, the wording "the active material layer 2 and the carrier layer 3 are stacked in such a manner as to be nonpeelable from each other" means that the structure of at least one of the two layers 2 and 3 will be destroyed while these layers are being peeled from each other. The peel strength between the two layers 2 and 3 is preferably even higher, and is, for example, preferably 50 N/10 mm or more, more preferably 60 N/10 mm or more, and even more preferably 120 N/10 mm or more.

In the case where the active material layer 2 and the carrier layer 3 are stacked in such a manner as to be peelable from each other, release treatment can be applied to a face, of the two main faces of the carrier layer 3, that is to oppose the active material layer 2. Examples of the release treatment include application of a surface smoothing agent, or a release agent made of resin. There is no particular limitation on the release agent as long as it has the function of enabling peeling of the active material layer and the carrier layer from each other, and a common release agent may be used.

The electrode member 1, which includes the active material layer 2 and the carrier layer 3, of the embodiment shown in Fig. 1 may have a total thickness of, for example, 150 µm or more, 200 µm or more, or 250 µm or more. On the other hand, the total thickness of the electrode member 1 may be, for example, 1100 µm or less, 800 µm or less, or 500 µm or less. An appropriate thickness can be selected in view of the handleability. The thickness of the electrode member 1 can be measured using a micrometer, for example.

### Method for Producing Electrode Member

The electrode member 1 of the embodiment shown in Fig. 1 can be suitably produced using a method described below, for example.

First, an electrode slurry containing an active material and a solvent is prepared. The active material is a positive electrode active material or a negative electrode active material as described above, and is typically in the form of particles. The particle size of the active material is, for example, preferably 10 nm or more, more preferably 1 µm or more, and even more preferably 3 µm or more, when expressed as the cumulative volume particle size D₅₀ at 50 vol% cumulative volume as measured using a laser diffraction scattering particle size distribution measurement method. On the other hand, the cumulative volume particle size D₅₀ is, for example, preferably 100 µm or less, more preferably 30 µm or less, and even more preferably 10 µm or less.

Examples of the solvent include nonpolar solvents such as heptane, methylcyclohexane, and toluene, aprotic polar solvents such as methyl isobutyl ketone and cyclohexanone, and mixtures thereof.

The electrode slurry may contain an additional material in addition to the active material and the solvent. Examples of the additional material include a binder, a conductive material, a solid electrolyte, and the like. The electrode slurry is prepared by mixing the active material and the solvent, and, when necessary, a binder, a conductive material, a solid electrolyte, various additives, and the like.

As a method for mixing the electrode slurry, for example, an ultrasonic homogenizer, a shaker, a thin-film spin mixer, a dissolver, a homomixer, a kneader, a roll mill, a sand mill, an attritor, a ball mill, a vibration mill, a high-speed impeller mill, or the like may be used.

The solid concentration of the electrode slurry is, for example, preferably 40 mass% or more, more preferably 50 mass% or more, and even more preferably 60 mass% or more, in view of the ease of applying the slurry. On the other hand, the solid concentration is, for example, preferably 90 mass% or less, and more preferably 80 mass% or less.

Once the electrode slurry is prepared, the electrode slurry is applied to one face of the carrier layer 3. Examples of the coating method include doctor blade coating, die coating, gravure coating, spray coating, electrostatic coating, bar coating, and the like. A coating film is formed by applying the electrode slurry to the one face of the carrier layer 3. Once the coating film is formed, the coating film is dried to remove the liquid component. The amount of liquid component contained in the coating film can be adjusted to a desired range by appropriately setting the drying conditions. Examples of the drying method include warm air drying, hot air drying, infrared drying, vacuum drying, drying through dielectric heating, and the like. Thus, a substantially dry active material layer 2 is formed. An active material layer 2 having a desired thickness can be formed by appropriately adjusting the amount of electrode slurry applied.

The electrode member 1 produced in this manner achieves good handleability of the active material layer 2, because the active material layer 2 is formed on one face of the carrier layer 3. Therefore, the electrode member 1 has the advantage of increasing the degrees of freedom in battery production in terms of material selection, structure design, and the like with respect to the active material layer 2.

### Another Electrode Member

Fig. 2 shows another embodiment of the electrode member 1 shown in Fig. 1. An electrode member 1 shown in Fig. 2 also has a sheet-like form. The electrode member 1 includes the active material layer 2 and the carrier layer 3 disposed on one face of the active material layer 2, and further includes a solid electrolyte layer 4 disposed on the other face of the active material layer 2.

The solid electrolyte layer 4 preferably contains a solid electrolyte. A solid electrolyte suitable for the type of a battery to be produced is used as the solid electrolyte. The solid electrolyte layer may contain one or two or more types of solid electrolytes. In the case where the battery to be produced is, for example, a secondary battery that uses lithium-ion conduction, the solid electrolyte preferably has lithium-ion conductivity. Examples of such solid electrolyte include inorganic solid electrolytes, such as sulfide solid electrolytes, oxide solid electrolytes, nitride solid electrolytes, and halide solid electrolytes; and organic polyelectrolytes, such as polymer electrolytes.

The solid electrolyte is preferably a sulfide solid electrolyte, which has high lithium-ion conductivity. The sulfide solid electrolyte may be the same as a sulfide solid electrolyte used in ordinary solid-state batteries. The sulfide solid electrolyte may be, for example, a sulfide solid electrolyte containing Li and S and having lithium-ion conductivity.

The sulfide solid electrolyte may be a crystalline material, a glass-ceramic, or glass. The sulfide solid electrolyte may have an argyrodite-type crystal structure. Examples of such sulfide solid electrolyte include compounds represented by Li₂S-P₂S₅, Li₂S-P₂S₅-LiX, where "X" represents one or more halogen elements, Li₂S-P₂S₅-P₂O₅, Li₂S-Li₃PO₄-P₂S₅, Li₃PS₄, Li₄P₂S₆, Li₁₀GeP₂S₁₂, Li_{3.25}Ge_{0.25}P_{0.75}S₄, Li₇P₃S₁₁, Li_{3.25}P_{0.95}S₄, and LiₐPS_{b}X_{c}, where "X" represents one or more halogen elements, a represents a number from 3.0 to 9.0, b represents a number from 3.5 to 6.0, and c represents a number from 0.1 to 3.0. In addition, sulfide solid electrolytes disclosed in WO 2013/099834 and WO 2015/001818, for example, may also be used.

The shape of the solid electrolyte is not particularly limited and may be, for example, a particle shape or a plate-like shape, but a particle shape is particularly preferable. In the case where the solid electrolyte has a particle shape, the particle size thereof may be, for example, 0.1 µm or more, 0.3 µm or more, or 0.5 µm or more, when expressed as the cumulative volume particle size D₅₀ at 50 vol% cumulative volume as measured using a laser diffraction scattering particle size distribution measurement method. On the other hand, the cumulative volume particle size D₅₀ is, for example, preferably 20 µm or less, more preferably 10 µm or less, even more preferably 7 µm or less, and yet even more preferably 5 µm or less.

The percentage of the solid electrolyte contained in the solid electrolyte layer 4 is not particularly limited as long as it is sufficient to allow the solid electrolyte layer 4 to exhibit the function of a solid electrolyte layer. The percentage of the solid electrolyte contained in the solid electrolyte layer 4 is, for example, preferably 50 mass% or more, more preferably 60 mass% or more, and even more preferably 70 mass% or more. On the other hand, the content of the solid electrolyte may be 100 mass% or less, for example.

The solid electrolyte layer 4 may contain an additional material in addition to the solid electrolyte. An example of the additional material is a porous support member. A porous support member contained in the solid electrolyte layer 4 has the advantage of enhancing the self-supporting properties and strength of the solid electrolyte layer 4.

A "base material" of the porous support member encompasses a plate-like material, a foil-like material, a sheet-like material, a film-like material, a mesh-like material, and the like. In the case where the porous support member has a sheet-like form, the porous support member may be, for example, a fiber sheet. A fiber sheet is a structure formed by molding fibers into a sheet-like shape. Examples of the fiber sheet include a nonwoven fabric, a woven fabric, a knitted fabric, paper, and the like. Alternatively, in the case where the porous support member has a film-like form, the porous support member may be, for example, a microporous film.

The term "porous" of the porous support member refers to a state of having a large number of pores. The porous support member preferably has a large number of pores. The pores may be formed by a plurality of fibrous materials. The porous support member preferably has, inside or on the surface, pores penetrating the porous support member from one face to the opposite face. The pores may have any size as long as at least some of the particles of the solid electrolyte can be filled into the pores. The pores of the porous support member may be, for example, micropores, mesopores, or macropores. The pores may be in communication with each other. In the case where the porous support member is a fiber sheet, the term "porous" refers to a state of having pores formed in spaces between the fibers. A particularly preferred porous support member is a nonwoven fabric, which is a type of fiber sheet.

There are various types of nonwoven fabrics, depending on the type of fibers used to produce nonwoven fabrics (the fiber length, the fiber diameter, the material of the fibers, etc.), the type of production method (e.g., the method for forming a web, the method for bonding fibers of the web, etc.), and the like. Examples of the nonwoven fabric include an orthogonal nonwoven fabric, a filament nonwoven fabric, a staple nonwoven fabric, a wet-laid nonwoven fabric, a dry-laid nonwoven fabric, an air-laid nonwoven fabric, a carded nonwoven fabric, a parallel-laid nonwoven fabric, a cross-laid nonwoven fabric, a random-laid nonwoven fabric, a spunbonded nonwoven fabric, a meltblown nonwoven fabric, a flashspun nonwoven fabric, a chemically bonded nonwoven fabric, a hydroentangled nonwoven fabric, a needle-punched nonwoven fabric, a stitch-bonded nonwoven fabric, a thermally bonded nonwoven fabric, a burst fiber nonwoven fabric, a tow opening nonwoven fabric, a film split nonwoven fabric, a composite nonwoven fabric, a complex nonwoven fabric, a coated nonwoven fabric, a laminated nonwoven fabric, and the like. Among these, a cross-laid nonwoven fabric is preferable. The cross-laid nonwoven fabric is preferable in that it is easy to adjust the ratio of the strength in the length direction X to the strength in the width direction Y, the basis weight, and the like. The ratio of the strength in the length direction X to the strength in the width direction Y of the cross-laid nonwoven fabric is preferably adjusted to be uniform. The cross-laid nonwoven fabric may have a low basis weight or a high basis weight. An example of the cross-laid nonwoven fabric is a polyolefin mesh cloth (see JP 2007-259734A). Details of the specific basis weight of the nonwoven fabric may be the same as those described in JP 2018-129307A, for example, and therefore, a description thereof is omitted here.

The constituent material, porosity, air permeability, thickness, and the like of the porous support member may be the same as those of a porous support member used in ordinary solid-state battery sheets. For example, the constituent material, porosity, air permeability, thickness, and the like of the porous support member may be the same as those of a porous support member disclosed in JP 2018-129307A, and are therefore not described here.

The electrode member 1, which includes the active material layer 2, the carrier layer 3, and the solid electrolyte layer 4, of the embodiment shown in Fig. 2 may have a total thickness of, for example, 200 µm or more, 500 µm or more, or 1000 µm or more. On the other hand, the total thickness of the electrode member 1 may be, for example, 3000 µm or less, 2000 µm or less, or 1500 µm or less. The thickness of the electrode member 1 can be selected in view of the handleability. The thickness of the electrode member 1 can be measured using a micrometer, for example.

### Method for Producing the Other Electrode Member

The electrode member 1 of the embodiment shown in Fig. 2 can be suitably produced from the electrode member of the embodiment shown in Fig. 1. More specifically, after the electrode member of the embodiment shown in Fig. 1 has been produced using the method described above, a step of stacking the solid electrolyte layer 4 on the other face of the active material layer 2, that is, a face, of the two faces of the active material layer 2, that is opposite to the face on which the carrier layer 3 is formed, is performed, and the electrode member 1 of the embodiment shown in Fig. 2 can thus be produced.

Examples of the method for stacking the solid electrolyte layer 4 on the active material layer 2 include a method in which a solid electrolyte slurry for forming a solid electrolyte layer is applied to the surface of the active material layer 2 and dried, a method in which a preliminarily formed solid electrolyte layer 4 is transferred onto and thereby stacked on the active material layer 2, and other methods.

When stacking the solid electrolyte layer 4 on the active material layer 2, it is preferable to use a self-supporting solid electrolyte layer as the solid electrolyte layer 4. Use of a self-supporting solid electrolyte layer 4 can increase the degrees of freedom in material selection and structure design with respect to the solid electrolyte layer 4. Also, production of the electrode member 1 can be performed efficiently. In the case of using a self-supporting solid electrolyte layer 4, it is preferable to use a method in which a solid electrolyte layer 4 containing a porous support member is prepared in advance, and the solid electrolyte layer 4 is transferred onto the active material layer 2 and thereby stacked thereon. The reason for this is that this is a more efficient production method.

In the case of using a self-supporting solid electrolyte layer as the solid electrolyte layer 4, it is preferable to use a solid electrolyte layer containing the above-described porous support member as the solid electrolyte layer 4, because such solid electrolyte layer has good self-supporting properties. A self-supporting solid electrolyte layer refers to a solid electrolyte layer having the ability to maintain the form of a solid electrolyte layer by itself. In order to produce a self-supporting solid electrolyte layer 4, a self-supporting solid electrolyte layer 4 can be obtained by, for example, impregnating a porous support member with a slurry containing a solid electrolyte. In particular, it is preferable that the impregnation of the porous support member with the slurry is performed by applying the slurry to each face of the porous support member and then applying pressure.

Alternatively, a self-supporting solid electrolyte layer 4 can be obtained by employing a method disclosed in JP 2018-129307A. Specifically, a self-supporting solid electrolyte layer 4 can be produced by forming a pressure sensitive adhesive layer on at least one face of a sheet-like porous support member, attaching particles of a solid electrolyte onto the pressure sensitive adhesive layer, and then applying pressure to the whole, thereby attaching a pressure sensitive adhesive constituting the pressure sensitive adhesive layer to the surface of portions of the porous support member that define the pores and filling particles of the solid electrolyte into the pores of the porous support member.

A method including the following steps (a) to (f) may also be employed as a method for producing a self-supporting solid electrolyte layer 4:
(a) preparing a porous support member;
(b) preparing a first member including a first support layer and a first solid electrolyte layer disposed on one face of the first support layer;
(c) preparing a second member including a second support layer and a second solid electrolyte layer disposed on one face of the second support layer;
(d) stacking the first member and the second member such that the first solid electrolyte layer and the second solid electrolyte layer oppose each other via the porous support member to obtain a stack;
(e) pressing the stack in the thickness direction to fill the solid electrolyte into the pores of the porous support member; and
(f) peeling and removing the first support layer and the second support layer from the stack.

Once the solid electrolyte layer 4 is stacked, with use of any of the above-described methods, on the face, of the two faces of the active material layer 2, that is opposite to the face on which the carrier layer 3 is formed, the entire stack of these layers may be pressed at least in the thickness direction. For example, the entire stack of the layers can be pressed in the thickness direction using a uniaxial press. Alternatively, the entire stack of the layers can be isotropically pressed using a CIP (cold isostatic press).

The strength of pressing in the step (e) is preferably a strength that is sufficient to fill the solid electrolyte into the pores of the porous support member. In addition, the strength of pressing in the step (e) is preferably a strength that is sufficient to allow the first support layer and the second support layer to be peeled from the stack.

The reason the first support layer and the second support layer can be peeled from the stack through pressing is presumed to be as follows. In this step (e), contraction or the like particles of the solid electrolyte contained in the solid electrolyte layer due to pressing causes a change in contact surfaces of the solid electrolyte layer with the first support layer and the second support layer, whereas pressing causes no change in contact surfaces of the first support layer and the second support layer with the solid electrolyte layer. This results in a difference in rate of change at the interfaces between the solid electrolyte layer and the first and second support layers, and consequently the first and second support layers become peelable.

### Battery Member

Fig. 3 shows an embodiment of a battery member of the present invention. The battery member is used as a constituent member of a battery. The battery member generally has a sheet-like form. A battery member 10 shown in Fig. 3 includes a positive electrode active material layer 11, a negative electrode active material layer 12, and a solid electrolyte layer 13. The positive electrode active material layer 11 is disposed on one face of the solid electrolyte layer 13. The negative electrode active material layer 12 is disposed on the other face of the solid electrolyte layer 13.

The positive electrode active material layer 11 generally contains particles of a positive electrode active material and, when necessary, contains additional materials such as a conductive material and a solid electrolyte.

The negative electrode active material layer 12 generally contains particles of a negative electrode active material and, when necessary, contains additional materials such as a conductive material and a solid electrolyte.

Details of the positive electrode active material, the negative electrode active material, and the solid electrolyte are the same as in the previously described embodiment shown in Fig. 1, and are therefore not described here.

The battery member 10 of the embodiment shown in Fig. 3 corresponds to an object in which a pair of electrode members 1 shown in Fig. 1 described above is used (however, the electrode members 1 have different active material layers 2, that is, a positive electrode active material layer and a negative electrode active material layer, respectively) and which is obtained by disposing a solid electrolyte layer 13 between the two electrode members 1 with the active material layers 2 of the two electrode members 1 being opposed to each other, pressing the entire stack of these layers, and then peeling and removing the carrier layers 3 from the respective electrode members 1. In this case, the mechanism by which the carrier layers 3 become peelable from the electrode members 1 is the same as the mechanism by which the first support layer and the second support layer become peelable from the solid electrolyte layer during the production process of the self-supporting solid electrolyte layer 4 described above. That is, the carrier layers 3 become peelable from the electrode members 1 as a result of pressing.

The battery member 10 of the embodiment shown in Fig. 3 corresponds also to an object in which a pair of electrode members 1 shown in Fig. 2 described above is used (however, the electrode members 1 have different active material layers 2, that is, a positive electrode active material layer and a negative electrode active material layer, respectively) and which is obtained by stacking the two electrode members 1 with the solid electrolyte layers 4 thereof being opposed to each other, pressing the entire stack, and then peeling and removing the carrier layers 3 from the respective electrode members 1. The mechanism by which the carrier layers 3 become peelable from the electrode members 1 is the same as the mechanism described above.

As shown in Fig. 3, the battery member 10 has a three-layer structure. The solid electrolyte layer 13 and the positive electrode active material layer 11 are in direct contact with each other, with no other layers provided between the two layers 11 and 13. Similarly, the solid electrolyte layer 13 and the negative electrode active material layer 12 are in direct contact with each other, with no other layers provided between the two layers 12 and 13. However, depending on the specific type of the battery to be produced, one or two or more other layers may be provided between the solid electrolyte layer 13 and the positive electrode active material layer 11 and/or between the solid electrolyte layer 13 and the negative electrode active material layer 12.

In the battery member 10, as shown in Fig. 3, the positive electrode active material layer 11 and the negative electrode active material layer 12 constitute the outermost surface of the battery member 10. In other words, in the battery member 10, the surface of the positive electrode active material layer 11, that is, a face, of the two main faces of the positive electrode active material layer 11, that is located on the side not opposing the solid electrolyte layer 13 is exposed to the outside, and there is no layer located outward of the positive electrode active material layer 11. Similarly, in the battery member 10, the surface of the negative electrode active material layer 12, that is, a face, of the two main faces of the negative electrode active material layer 12, that is located on the side not opposing the solid electrolyte layer 13 is exposed to the outside, and there is no layer located outward of the negative electrode active material layer 12. The battery member 10 having this structure has the advantage of allowing for high degrees of freedom in material selection and structure design during production of a battery with use of the battery member 10. From the viewpoint of making this advantage more prominent, it is preferable that, in the battery member 10, the positive electrode active material layer 11, the solid electrolyte layer 13, and the negative electrode active material layer 12 are integrated to form a single integrated structure. The term "single integrated structure" refers to a state in which adjacent layers adhere to each other inseparably rather than a state in which adjacent layers are simply laid one on top of the other. Specifically, in the battery member 10, the positive electrode active material layer 11 and the solid electrolyte layer 13 adhere to each other inseparably, and the negative electrode active material layer 12 and the solid electrolyte layer 13 adhere to each other inseparably.

It is preferable that the positive electrode active material layer 11 has a peel strength of preferably 20 N/10 mm or more with respect to the solid electrolyte layer 13, from the viewpoint of ensuring that the positive electrode active material layer 11 and the solid electrolyte layer 13 adhere to each other. From this viewpoint, the positive electrode active material layer 11 has a peel strength of more preferably 30 N/10 mm or more, and even more preferably 50 N/10 mm or more, with respect to the solid electrolyte layer 13. From a similar viewpoint, the negative electrode active material layer 12 has a peel strength of preferably 20 N/10 mm or more, more preferably 30 N/10 mm or more, and even more preferably 50 N/10 mm or more, with respect to the solid electrolyte layer 13. An example of the method for measuring the peel strength is to cut a 10-mm wide strip from a stack in which target layers are stacked and perform an interlayer peeling test (180-degree peeling, at a test speed of 50 mm/min) on a tensile and pressing testing machine using the strip as a specimen.

The peel strength of the positive electrode active material layer 11 or the negative electrode active material layer 12 with respect to the solid electrolyte layer 13 can be set to the above value or greater by applying a predetermined pressure to the battery member 10 at least in the thickness direction in the method for producing the battery member 10.

### Another Battery Member

Fig. 4 shows another embodiment of the battery member of the present invention. A battery member 20 shown in Fig. 4 serves as a precursor of the battery member 10 of the embodiment shown in Fig. 3 and includes all the constituents of the battery member 10 of the embodiment shown in Fig. 3.

As with the battery member 10 described above, the battery member 20 may have a sheet-like form. The battery member 20 includes a positive electrode member 21, a negative electrode member 22, and a solid electrolyte layer 13. The solid electrolyte layer 13 is disposed between the positive electrode member 21 and the negative electrode member 22.

The positive electrode member 21 includes a positive electrode active material layer 11 and a first carrier layer 23 disposed on one face of the positive electrode active material layer 11. The positive electrode active material layer 11 is the same as the positive electrode active material of the embodiment shown in Fig. 3, and a description thereof is therefore omitted here. The first carrier layer 23 is the same as the carrier layer 3 of the embodiment shown in Fig. 1, and a description thereof is therefore omitted here.

The positive electrode active material layer 11 contains particles of a positive electrode active material. The positive electrode active material is of the same type as that contained in the active material layer 2 of the embodiment shown in Fig. 1, and a description thereof is therefore omitted here.

The negative electrode member 22 includes a negative electrode active material layer 12 and a second carrier layer 24 disposed on one face of the negative electrode active material layer 12. The negative electrode active material layer 12 is the same as the negative electrode active material of the embodiment shown in Fig. 3, and a description thereof is therefore omitted here. The second carrier layer 24 is the same as the carrier layer 3 of the embodiment shown in Fig. 1, and a description thereof is therefore omitted here.

The negative electrode active material layer 12 contains particles of a negative electrode active material. The negative electrode active material is of the same type as that contained in the active material layer 2 of the embodiment shown in Fig. 1, and a description thereof is therefore omitted here.

Details of the solid electrolyte layer 13 disposed between the positive electrode member 21 and the negative electrode member 22 are the same as in the previously described embodiment shown in Fig. 2, and are therefore not described here.

In the present embodiment, as shown in Fig. 4, the first carrier layer 23, the positive electrode active material layer 11, the solid electrolyte layer 13, the negative electrode active material layer 12, and the second carrier layer 24 are stacked in this order. That is, the battery member 20 is formed by stacking the positive electrode member 21, the solid electrolyte layer 13, and the negative electrode member 22 such that the positive electrode active material layer 11 of the positive electrode member 21 opposes one face of the solid electrolyte layer 13 and the negative electrode active material layer 12 of the negative electrode member 22 opposes the other face of the solid electrolyte layer 13. As a result, in the battery member 20, the first carrier layer 23 and the second carrier layer 24 constitute the outermost surface of the battery member 20. In other words, in the battery member 20, the surface of the first carrier layer 23, that is, a face, of the two main faces of the first carrier layer 23, that is located on the side not opposing the positive electrode active material layer 11 is exposed to the outside, and there is no layer located outward of the first carrier layer 23. Similarly, in the battery member 10, the surface of the second carrier layer 24, that is, a face, of the two main faces of the second carrier layer 24, that is located on the side not opposing the negative electrode active material layer 12 is exposed to the outside, and there is no layer located outward of the second carrier layer 24.

With respect to the battery member 20 of the present embodiment shown in Fig. 4, when the first carrier layer 23 is peelable from the positive electrode active material layer 11, and the second carrier layer 24 is peelable from the negative electrode active material layer 12, the battery member 10 of the embodiment shown in Fig. 3 can be obtained by peeling the first carrier layer 23 from the positive electrode active material layer 11 and peeling the second carrier layer 24 from the negative electrode active material layer 12. In view of this, it is preferable that the positive electrode member 21 includes no layer provided between the positive electrode active material layer 11 and the first carrier layer 23, and the two layers 11 and 23 are in direct contact with each other. Similarly, it is preferable that the negative electrode member 22 includes no layer provided between the negative electrode active material layer 12 and the second carrier layer 24, and the two layers 12 and 24 are in direct contact with each other.

### Method for Producing Battery Member

The battery member 20 of the embodiment shown in Fig. 4 can be suitably produced using a method described below, for example.

First, a positive electrode slurry containing a positive electrode active material and a solvent is prepared. Also, a negative electrode slurry containing a negative electrode active material and a solvent is prepared. Details of the positive electrode slurry and the negative electrode slurry are not described here because the description of the electrode slurry used in the production of the electrode member 1 of the embodiment shown in Fig. 1 applies.

Once the positive electrode slurry and the negative electrode slurry are prepared, the positive electrode slurry is applied to one face of a first carrier layer 23. Also, the negative electrode slurry is applied to one face of a second carrier layer 24. The method for applying the positive electrode slurry and the negative electrode slurry may be the same as the method for applying the electrode slurry that can be used to produce the electrode member 1 of the embodiment shown in Fig. 1. Coating films are formed by applying the positive electrode slurry and the negative electrode slurry to one face of the first carrier layer 23 and one face of the second carrier layer 24, respectively. Once the coating films are formed, the coating films are dried to remove the liquid component. Thus, a substantially dry positive electrode active material layer 11 and a substantially dry negative electrode active material layer 12 are formed. A positive electrode active material layer 11 and a negative electrode active material layer 12 having desired thicknesses can be formed by appropriately adjusting the amounts of positive and negative electrode slurries applied. In this manner, a positive electrode member 21 and a negative electrode member 22 are produced.

The faces of the first carrier layer 23 and the second carrier layer 24 to which the positive electrode slurry and the negative electrode slurry are respectively applied may be subjected to release treatment when necessary.

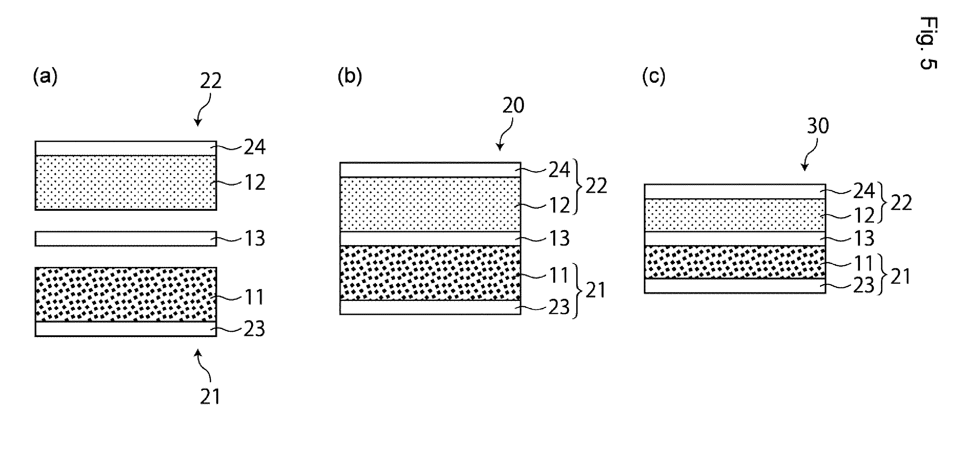

Next, as shown in Fig. 5(a), a solid electrolyte layer 13 is disposed between the positive electrode member 21 and the negative electrode member 22. At this time, the positive electrode member 21, the negative electrode member 22, and the solid electrolyte layer 13 are placed such that the positive electrode active material layer 11 of the positive electrode member 21 opposes the solid electrolyte layer 13 and the negative electrode active material layer 12 of the negative electrode member 22 opposes the solid electrolyte layer 13. When stacking the positive electrode member 21, the negative electrode member 22, and the solid electrolyte layer 13 that are placed in this state, the operation is advantageously facilitated if the solid electrolyte layer 13 is a self-supporting solid electrolyte layer. As a self-supporting solid electrolyte layer 13, a solid electrolyte layer 13 containing a porous support member can be used as described above.

Once the positive electrode member 21, the negative electrode member 22, and the solid electrolyte layer 13 are placed as shown in Fig. 5(a), a step of stacking them as shown in Fig. 5(b) is performed. That is, the self-supporting solid electrolyte layer 13 is disposed between the positive electrode member 21 and the negative electrode member 22 to obtain a stack 30 in which the first carrier layer 23, the positive electrode active material layer 11, the solid electrolyte layer 13, the negative electrode active material layer 12, and the second carrier layer 24 are stacked in this order. At this point in time, the constituent members of the stack 30 are simply laid one on top of another, and therefore, the constituent members are not integrated. For this reason, it is preferable to press the stack 30 at least in the thickness direction in order to integrate the constituent members. The pressing can be performed in the same manner as the pressing of the previously described electrode member 1 shown in Fig. 2. For example, the pressing can be performed in the thickness direction using a uniaxial press. Alternatively, the entire stack 30 can be isotropically pressed using a CIP (cold isostatic press).

Preferably, the stack 30 is pressed such that the positive electrode active material layer 11 or the negative electrode active material layer 12 has a peel strength of preferably 20 N/10 mm or more, more preferably 30 N/10 mm or more, and even more preferably 50 N/10 mm or more, with respect to the solid electrolyte layer 13. The method for measuring the peel strength is as described above.

As a result of pressing the stack 30, a target battery member 20 is obtained as shown in Fig. 5(c). Since the battery member 20 is produced by pressing the stack 30, the positive electrode active material layer 11, the solid electrolyte layer 13, and the negative electrode active material layer 12, which constitute the battery member 20, are integrated in a nonpeelable manner.

The thus obtained battery member 20 can be directly used as a constituent member of a battery and assembled into the battery. Alternatively, the battery member 20, that is, the pressed stack 30 may be subjected to a downstream step of peeling the first carrier layer 23 and the second carrier layer 24 from the battery member 20. A battery member 10 having the form shown in Fig. 3 can be obtained by performing this peeling step. In this case, the mechanism by which the first carrier layer 23 and the second carrier layer 24 become peelable from the stack 30 is the same as the mechanism by which the first support layer and the second support layer become peelable from the solid electrolyte layer during the production process of the self-supporting solid electrolyte layer 4 described above. That is, the first carrier layer 23 and the second carrier layer 24 become peelable from the stack 30 as a result of pressing.

### Method for Producing Battery

The battery member 10 shown in Fig. 3 can also be used as a constituent member of a battery and assembled into the battery. Prior to assembling the battery member 10 into the battery, it is possible to perform a step of disposing a first current collector (not shown) on a face of the positive electrode active material layer 11 that is opposite to a face thereof on which the solid electrolyte layer 13 is formed and disposing a second current collector (not shown) on a face of the negative electrode active material layer 12 that is opposite to a face thereof on which the solid electrolyte layer 13 is formed. That is, it is possible to dispose the first current collector (not shown) on the surface of the positive electrode active material layer 11 of the battery member 10 and dispose the second current collector (not shown) on the surface of the negative electrode active material layer 12. The battery can be produced with high efficiency by assembling the battery member 10 into the battery thereafter. The first current collector and the second current collector are not particularly limited as long as they are constituted by conductive materials, and various metal materials generally used for current collectors of batteries can be used. The material constituting the first current collector and the material constituting the second current collector may be the same or different.

Once the battery member 10 shown in Fig. 3 is produced according to the method illustrated in Figs. 5(a) to 5(c), a step of stacking two or more battery members 10 via a current collector such that the battery members 10 are electrically connected may be performed before assembling the battery members 10 into a battery. In an example, when two battery members 10, a first battery member and a second battery member, are used, the two battery members 10 can be connected in series by disposing a current collector on an external face of the positive electrode active material layer 11 of the first battery member, disposing a current collector on an external face of the negative electrode active material layer 12 of the second battery member, and electrically connecting the two current collectors.

In another example, when two battery members 10, a first battery member and a second battery member, are used, the two battery members 10 can be connected in parallel by disposing current collectors on external faces of the positive electrode active material layer 11 and the negative electrode active material layer 12, respectively, of each battery member, and electrically connecting the current collector on the positive electrode active material layer 11 of the first battery member to the current collector on the positive electrode active material layer 11 of the second battery member and electrically connecting the current collector on the negative electrode active material layer 12 of the first battery member to the current collector on the negative electrode active material layer 12 of the second battery member.

A battery can be produced by stacking a plurality of battery members 10 connected in series or in parallel as described above. According to the present embodiment, since individual battery members 10 can be handled separately, battery members 10 can be connected in series or in parallel through a straightforward operation of changing the stacking method of the battery members 10.

The present invention has been described based on preferred embodiments thereof, but the present invention is not limited to the embodiments given above.

For example, although an electrode member and a battery member suitably used for a solid-state battery having lithium-ion conductivity have been mainly described in the embodiments above, the battery to which the present invention is applicable is not limited to a solid-state battery having lithium-ion conductivity.

With regard to the embodiments described above, the present invention further discloses the following electrode member, battery member, method of producing a battery member, and method of producing a battery.
(1) An electrode member comprising:
   an active material layer containing an active material; and
   a carrier layer disposed on a first face of the active material layer.
(2) The electrode member as set forth in clause (1), wherein the carrier layer comprises at least one of a carrier resin, a carrier glass material, and a carrier metal foil.
(3) The electrode member as set forth in clause (1) or (2), further comprising: a solid electrolyte layer containing a solid electrolyte and being disposed on another face of the active material layer.
(4) The electrode member as set forth in clause (3), wherein the solid electrolyte layer contains a sulfide solid electrolyte.
(5) The electrode member as set forth in clause (3) or (4), wherein the solid electrolyte layer contains a porous support member.
(6) A battery member comprising:
   a solid electrolyte layer;
   a positive electrode active material layer containing a positive electrode active material and being disposed on a first face of the solid electrolyte layer; and
   a negative electrode active material layer containing a negative electrode active material and being disposed on a second face of the solid electrolyte layer,
   wherein the positive electrode active material layer and the negative electrode active material layer constitute an outermost surface of the battery member.
(7) The battery member as set forth in clause (6), wherein the positive electrode active material layer, the solid electrolyte layer, and the negative electrode active material layer are integrated to form a single integrated structure.
(8) The battery member as set forth in clause (6) or (7), wherein the solid electrolyte layer contains a sulfide solid electrolyte.
(9) The battery member as set forth in any one of clauses (6) to (8), wherein the solid electrolyte layer contains a porous support member.
(10) A battery member comprising:
   a positive electrode member including
      a positive electrode active material layer containing a positive electrode active material and
      a first carrier layer disposed on a first face of the positive electrode active material layer;
   a negative electrode member including
      a negative electrode active material layer containing a negative electrode active material and
      a second carrier layer disposed on a first face of the negative electrode active material layer; and
   a solid electrolyte layer disposed between the positive electrode member and the negative electrode member,
   wherein the first carrier layer, the positive electrode active material layer, the solid electrolyte layer, the negative electrode active material layer, and the second carrier layer are stacked in this order.
(11) The battery member as set forth in clause (10), wherein the carrier layers comprise at least one of a carrier resin, a carrier glass material, and a carrier metal foil.
(12) The battery member as set forth in clause (10) or (11), wherein the solid electrolyte layer contains a sulfide solid electrolyte.
(13) The battery member as set forth in any one of clauses (10) to (12), wherein the solid electrolyte layer contains a porous support member.
(14) A method for producing a battery member, the method comprising the steps of: preparing an electrode slurry containing an active material and a solvent; and forming an active material layer by applying the electrode slurry to a first face of a carrier layer and drying the electrode slurry.
(15) The method as set forth in clause (14), wherein at least one of a carrier resin, a carrier glass material, and a carrier metal foil is used for the carrier layer.
(16) The method as set forth in clause (14) or (15), further including the step of:
   stacking a self-supporting solid electrolyte layer on a face of the active material layer that is opposite to the carrier layer.
(17) The method as set forth in clause (16), wherein the solid electrolyte layer contains a sulfide solid electrolyte.
(18) The method as set forth in clause (16) or (17), wherein the solid electrolyte layer contains a porous support member.
(19) A method for producing a battery member, the method comprising the steps of:
   preparing a positive electrode slurry containing a positive electrode active material and a solvent and a negative electrode slurry containing a negative electrode active material and a solvent;
   forming a positive electrode member by applying the positive electrode slurry to a first face of a first carrier layer and drying the positive electrode slurry, and forming a negative electrode member by applying the negative electrode slurry to a first face of a second carrier layer and drying the negative electrode slurry; and
   disposing a self-supporting solid electrolyte layer between the positive electrode member and the negative electrode member to obtain a stack in which the first carrier layer, the positive electrode active material layer, the solid electrolyte layer, the negative electrode active material layer, and the second carrier layer are stacked in this order.
(20) The method as set forth in clause (19), further including the step of: pressing the stack at least in a thickness direction.
(21) The method as set forth in clause (20), including the step of:
   peeling the first carrier layer and the second carrier layer from the stack after the step of pressing the stack.
(22) A method for producing a battery, the method comprising the steps of:
   preparing a positive electrode slurry containing a positive electrode active material and a solvent and a negative electrode slurry containing a negative electrode active material and a solvent;
   forming a positive electrode member by applying the positive electrode slurry to a first face of a first carrier layer and drying the positive electrode
   slurry, and forming a negative electrode member by applying the negative electrode slurry to a first face of a second carrier layer and drying the negative electrode slurry;
   disposing a self-supporting solid electrolyte layer between the positive electrode member and the negative electrode member to form a stack in which the first carrier layer, the positive electrode active material layer, the solid electrolyte layer, the negative electrode active material layer, and the second carrier layer are stacked in this order;
   pressing the stack at least in a thickness direction;
   peeling the first carrier layer and the second carrier layer from the pressed stack; and
   disposing a first current collector on a first face of the positive electrode active material layer of the stack after the peeling, wherein the first face is opposite to a second face of the positive electrode active material layer on which the solid electrolyte layer is formed, and disposing a second current collector on a first face of the negative electrode active material layer, wherein the first face is opposite to a second face of the negative electrode on which the solid electrolyte layer is formed.
(23) A method for producing a battery, the method comprising the steps of:
   preparing a positive electrode slurry containing a positive electrode active material and a solvent and a negative electrode slurry containing a negative electrode active material and a solvent;
   forming a positive electrode member by applying the positive electrode slurry to a first face of a first carrier layer and drying the positive electrode slurry, and forming a negative electrode member by applying the negative electrode slurry to a first face of a second carrier layer and drying the negative electrode slurry;
   disposing a self-supporting solid electrolyte layer between the positive electrode member and the negative electrode member to form a stack in which the first carrier layer, the positive electrode active material layer, the solid electrolyte layer, the negative electrode active material layer, and the second carrier layer are stacked in this order;
   pressing the stack at least in a thickness direction;
   peeling the first carrier layer and the second carrier layer from the pressed stack; and
   stacking two or more of the stack after the peeling via a current collector in such a manner that the two or more stacks are electrically connected.

### Industrial Applicability

According to the present invention, an electrode member and a battery member that enable a battery to be produced with high degrees of freedom in material selection and structure design, and methods for producing them are provided.

## Claims

1. An electrode member comprising:
an active material layer containing an active material; and
a carrier layer disposed on a first face of the active material layer.

2. The electrode member according to claim 1, wherein the carrier layer comprises at least one of a carrier resin, a carrier glass material, and a carrier metal foil.

3. The electrode member according to claim 1 or 2, further comprising:
a solid electrolyte layer containing a solid electrolyte and being disposed on a second face of the active material layer.

4. The electrode member according to claim 3, wherein the solid electrolyte layer contains a sulfide solid electrolyte.

5. The electrode member according to claim 3, wherein the solid electrolyte layer contains a porous support member.

6. A battery member comprising:
a solid electrolyte layer;
a positive electrode active material layer containing a positive electrode active material and being disposed on a first face of the solid electrolyte layer; and
a negative electrode active material layer containing a negative electrode active material and being disposed on a second face of the solid electrolyte layer,
wherein the positive electrode active material layer and the negative electrode active material layer constitute an outermost surface of the battery member.

7. The battery member according to claim 6, wherein the positive electrode active material layer, the solid electrolyte layer, and the negative electrode active material layer are integrated to form a single integrated structure.

8. The battery member according to claim 6 or 7, wherein the solid electrolyte layer contains a sulfide solid electrolyte.

9. The battery member according to claim 6 or 7, wherein the solid electrolyte layer contains a porous support member.

10. A battery member comprising:
a positive electrode member including
a positive electrode active material layer containing a positive electrode active material and
a first carrier layer disposed on a first face of the positive electrode active material layer;
a negative electrode member including
a negative electrode active material layer containing a negative electrode active material and
a second carrier layer disposed on a first face of the negative electrode active material layer; and
a solid electrolyte layer disposed between the positive electrode member and the negative electrode member,
wherein the first carrier layer, the positive electrode active material layer, the solid electrolyte layer, the negative electrode active material layer, and the second carrier layer are stacked in this order.

11. The battery member according to claim 10, wherein the carrier layers comprise at least one of a carrier resin, a carrier glass material, and a carrier metal foil.

12. The battery member according to claim 10 or 11, wherein the solid electrolyte layer contains a sulfide solid electrolyte.

13. The battery member according to claim 10 or 11, wherein the solid electrolyte layer contains a porous support member.

14. A method for producing a battery member, the method comprising the steps of:
preparing an electrode slurry containing an active material and a solvent; and forming an active material layer by applying the electrode slurry to a first face of a carrier layer and drying the electrode slurry.

15. The method according to claim 14, wherein at least one of a carrier resin, a carrier glass material, and a carrier metal foil is used for the carrier layer.

16. The method according to claim 14 or 15, further comprising the step of:
stacking a self-supporting solid electrolyte layer on a face of the active material layer that is opposite to the carrier layer.

17. The method according to claim 16, wherein the solid electrolyte layer contains a sulfide solid electrolyte.

18. The method according to claim 16, wherein the solid electrolyte layer contains a porous support member.

19. A method for producing a battery member, the method comprising the steps of:
preparing a positive electrode slurry containing a positive electrode active material and a solvent and a negative electrode slurry containing a negative electrode active material and a solvent;
forming a positive electrode member by applying the positive electrode slurry to a first face of a first carrier layer and drying the positive electrode slurry, and forming a negative electrode member by applying the negative electrode slurry to a first face of a second carrier layer and drying the negative electrode slurry; and
disposing a self-supporting solid electrolyte layer between the positive electrode member and the negative electrode member to obtain a stack in which the first carrier layer, the positive electrode active material layer, the solid electrolyte layer, the negative electrode active material layer, and the second carrier layer are stacked in this order.

20. The method according to claim 19, further comprising the step of: pressing the stack at least in a thickness direction.

21. The method according to claim 20, comprising the step of:
peeling the first carrier layer and the second carrier layer from the stack after the step of pressing the stack.

22. A method for producing a battery, the method comprising the steps of:
preparing a positive electrode slurry containing a positive electrode active material and a solvent and a negative electrode slurry containing a negative electrode active material and a solvent;
forming a positive electrode member by applying the positive electrode slurry to a first face of a first carrier layer and drying the positive electrode slurry, and forming a negative electrode member by applying the negative electrode slurry to a first face of a second carrier layer and drying the negative electrode slurry;
disposing a self-supporting solid electrolyte layer between the positive electrode member and the negative electrode member to form a stack in which the first carrier layer, the positive electrode active material layer, the solid electrolyte layer, the negative electrode active material layer, and the second carrier layer are stacked in this order;
pressing the stack at least in a thickness direction;
peeling the first carrier layer and the second carrier layer from the pressed stack; and
disposing a first current collector on a first face of the positive electrode active material layer of the stack after the peeling, wherein the first face is opposite to a second face of the positive electrode active material layer on which the solid electrolyte layer is formed, and disposing a second current collector on a first face of the negative electrode active material layer, wherein the first face is opposite to a second face of the negative electrode on which the solid electrolyte layer is formed.

23. A method for producing a battery, the method comprising the steps of:
preparing a positive electrode slurry containing a positive electrode active material and a solvent and a negative electrode slurry containing a negative electrode active material and a solvent;
forming a positive electrode member by applying the positive electrode slurry to a first face of a first carrier layer and drying the positive electrode slurry, and forming a negative electrode member by applying the negative electrode slurry to a first face of a second carrier layer and drying the negative electrode slurry;
disposing a self-supporting solid electrolyte layer between the positive electrode member and the negative electrode member to form a stack in which the first carrier layer, the positive electrode active material layer, the solid electrolyte layer, the negative electrode active material layer, and the second carrier layer are stacked in this order;
pressing the stack at least in a thickness direction;
peeling the first carrier layer and the second carrier layer from the pressed stack; and
stacking two or more of the stack after the peeling via a current collector in such a manner that the two or more stacks are electrically connected.
